# EUROPÄISCHE PATENTSCHRIFT

(11) **EP 4 397 473 B1**
(45) Veröffentlichungstag und Bekanntmachung des Hinweises auf die Patenterteilung: **30.04.2025**
(21) Anmeldenummer: 23150789.8
(22) Anmeldetag: 09.01.2023
(51) Int. Cl.: B29C 65/10, E04D 15/04, B29L 31/10

(54) **SCHWEISSAUTOMAT UND VERFAHREN ZUM THERMISCHEN VERBINDEN VON MATERIALBAHNEN**
AUTOMATIC WELDING MACHINE AND METHOD FOR THERMALLY JOINING MATERIAL WEBS
AUTOMATE DE SOUDAGE ET PROCÉDÉ DE RACCORDEMENT THERMIQUE DE BANDES DE MATÉRIAU

(43) Veröffentlichungstag der Anmeldung: 10.07.2024
(60) Teilanmeldung: 25163619.7
(73) Patentinhaber: Leister Technologies AG, 6056 Kägiswil (CH)
(72) Erfinder: Bürgler, Roger, 6373 Ennetbürgen (CH); Röthlin, Paul, 6064 Kerns (CH)
(74) Vertreter: Witte, Weller & Partner Patentanwälte mbB

(56) Entgegenhaltungen:
- EP-A1- 3 028 836
- US-A- 5 234 533
- US-A1- 2008 066 870
- US-B1- 6 187 122

## Beschreibung

Die vorliegende Erfindung betrifft einen Schweißautomat zum thermischen Verbinden von Materialbahnen. Die vorliegende Erfindung betrifft ferner ein entsprechendes Verfahren zum thermischen Verbinden von Materialbahnen.

Schweißautomaten zum thermischen Verbinden von Materialbahnen sind aus dem Stand der Technik grundsätzlich bekannt. Derartige Schweißautomaten werden etwa zum thermischen Verbinden bzw. Verschweißen von thermoplastischen Materialbahnen, etwa Kunststofffolien bzw. Kunststoff- oder Bitumenbahnen, entlang ihrer überlappenden Randbereiche verwendet. Neben einem Antrieb und zumindest einem Heißluftaggregat oder einer Heizkeileinrichtung weisen derartige Schweißautomaten ein Fahrwerk mit einer oder mehrerer Antriebsrollen, Andruckrollen und/oder Stützrollen oder einer Kombination hiervon auf. Während des automatischen Schweißvorgangs bewegt sich der Schweißautomat über eine im Wesentlichen ebene (Ober-)Fläche, auf der die zu verschweißenden Materialien durch den Schweißautomaten verschweißt werden. Im Falle des Heißluftschweißens wird dabei zumindest eine Heißluftdüse, die an dem Heißluftaustritt eines Heißluftaggregats des Schweißautomaten angeordnet ist, in einem Schweißbereich der zu verschweißenden Materialien zwischen die sich überlappenden Randbereiche der Materialen geführt, um die Materialien im Schweißbereich durch Wärmeeintrag zu plastifizieren. Anschließend werden die derart plastifizierten Bereiche der Materialien zusammengedrückt und eine formschlüssige Verbindung hergestellt, etwa durch eine der Heißluftdüse in Arbeitsrichtung bzw. Bewegungsrichtung des Schweißautomaten nachgeordnete Andruckrolle.

DE 20 2018 101 429 U1 offenbart einen Schweißautomat zum randseitigen Verschweißen flächiger, thermoplastischer Materialien mit einem Gehäuse, mindestens einem Antrieb und zumindest einem Heißluftaggregat zur Erhitzung der zu verschweißenden Materialien in einem Schweißbereich, wobei das Heißluftaggregat derart an dem Schweißautomaten angeordnet ist, dass das Heißluftaggregat um eine parallel zu der Querachse des Gehäuses ausgerichteten Achse drehbar und entlang dieser Achse verschiebbar ist.

Zur Erhöhung der Stabilität, insbesondere gegen ein seitliches Kippen, weisen bodennahe Heißluftschweißautomaten häufig zusätzliche Stützräder auf, die möglichst weit auseinander liegen. Ein beispielhafter Schweißautomat ist in der EP 3 028 836 B1 beschrieben. Bei gewissen, randnahen Anwendungen (Brüstungen auf Dächern etc.) stehen diese Stützräder teilweise im Weg, bzw. Verhindern ein randnahes Schweißen. Deshalb sind die beiden seitlichen Stützräder in der EP 3 028 836 B1 gemeinsam auf einer verschiebbaren Auflage fixiert, und können somit zusammen auf die eine oder andere Seite des Automaten verschoben werden, je nach Schweißaufgabe.

Gemäß der Zusammenfassung offenbart EP 3 028 836 B1 einen Schweißautomat zum randseitigen Verbinden von sich am Rand überlappenden Materialbahnen, die unter Wärmeeinwirkung und anschließender Druckbeaufschlagung stoffschlüssig miteinander verbindbar sind, mit einem Fahrgestell, an dem zumindest Laufrollen, eine Heizeinrichtung und mindestens eine Andruckrolle angeordnet ist. Die Heizeinrichtung weist ein seitlich auskragendes zwischen die Ränder der Materialbahnen einführbares Kontaktheizelement auf, wobei das Fahrgestell von einem Elektromotor angetrieben ist, der an einem Längsschenkel des Fahrgestells angeordnet ist. Der Elektromotor ist erfindungsgemäß als bürstenloser Gleichstrommotor und das Untersetzungsgetriebe als Umlaufrädergetriebe ausgebildet, die zu einem Trommelantriebsmotor vereint sind. Dabei ist der Gleichstrommotor vorzugsweise ein Scheibenläufermotor.

Das Fahrgestell in der EP 3 028 836 B1 weist einen Querschenkel auf, der gegenüber dem Längsschenkel senkrecht zu der Arbeitsfahrtrichtung verstellbar ist. Damit kann der gesamte Querschenkel mit den nicht angetriebenen Laufrollen gegenüber dem Längsschenkel, auf dem die Heizeinrichtung und die Steuerung des Schweißautomaten angeordnet sind und an dem der die Antriebsrolle tragende Trommelantriebsmotor befestigt ist, seitlich verschoben werden. Das Fahrgestell kann somit in der Form verändert werden, und zwar von einer ersten L-förmigen Formvariante, bei der der Querschenkel in Arbeitsfahrtrichtung nur links über den Längsschenkel vorsteht, über T-förmige Formvarianten, bei der sich der Querschenkel links und rechts über den Längsschenkel hinaus erstreckt, in eine zweite L-förmige Formvariante überführt werden, bei der der Querschenkel in Arbeitsfahrtrichtung nur rechts über den Längsschenkel vorsteht. Dies ermöglicht vorteilhafterweise jeweils ein randnahes Schweißen entlang von Aufkantungen oder Abkantungen der die Materialbahnen tragenden Auflagefläche, d.h. beispielsweise von sich aufwärts erstreckenden Wand-, Tür-, Schacht- oder Brüstungsanschlüssen und eben auslaufenden Stirnkantenabschlüssen von Flachdächern.

US 2008/0066870 A1 offenbart ein Schweißgerät zum Verbinden seitlich überlappender Dichtungsbahnen.

US 5 234 533 A offenbart ein portables Heißluftschweißgerät für Materialbahnen.

US 6,187,122 B1 offenbart ein Gerät zum Schweißen von Dachmembranen mit zwei Schweißnähten und Verfahren zu dessen Verwendung.

Vor diesem Hintergrund besteht eine Aufgabe der vorliegenden Offenbarung darin, einen weiter verbesserten Schweißautomat zum thermischen Verbinden von Materialbahnen bereitzustellen. Insbesondere wäre es wünschenswert einen Schweißautomat mit einfacher Handhabung bereitzustellen und/oder einen Wartungsaufwand zu reduzieren. Ferner wäre es wünschenswert eine Fertigungskomplexität in der Herstellung zu reduzieren.

Gemäß einem ersten Aspekt der vorliegenden Offenbarung wird Schweißautomat zum thermischen Verbinden von Materialbahnen, insbesondere zum randseitigen Verbinden von einer überlappenden oberen Materialbahn mit einer unteren Materialbahn, die unter Wärmeeinwirkung und anschließender Druckbeaufschlagung stoffschlüssig miteinander verbindbar sind, bereitgestellt mit: einer Heizeinrichtung zum zumindest teilweisen Erhitzen der zu verbinden-den Materialbahnen in einem Verbindungsbereich; einem Tragrahmen mit einem Gehäuse; einer Andruckrolle; wenigstens zwei Fahrrollen; wobei die Andruckrolle und die Fahrrollen an dem Tragrahmen angeordnet sind und zusammen mit dem Tragrahmen ein Fahrgestell ausbilden, wobei das Fahrgestell eine Längsachse und eine dazu senkrechte Querachse aufweist, die eine Fahrgestellebene aufspannen; wobei zumindest eine erste Fahrrolle der zwei Fahrrollen gegenüber dem Tragrahmen mittels eines Teleskopauszugs in Richtungen parallel zu der Querachse beweglich angeordnet ist. Die erste Fahrrolle und die Heizeinrichtung können bezüglich einer Längsmitte des Fahrgestells auf gegenüberliegenden Seiten des Fahrgestells angeordnet sein. Der Teleskopauszug weist eine Achse auf, wobei die erste Fahrrolle fest an der Achse des Teleskopauszugs befestigt ist, wobei die Achse in einem ausgefahrenen Zustand aus dem Gehäuse des Tragrahmens herausgezogen ist und in einem eingefahrenen Zustand von dem Gehäuse des Tragrahmens aufgenommen wird; und wobei die Elemente des Teleskopauszugs ineinandergeschoben werden.

Gemäß einem weiteren Aspekt der vorliegenden Offenbarung wird ein Verfahren zum thermischen Verbinden von Materialbahnen, insbesondere zum randseitigen Verbinden von einer überlappenden oberen Materialbahn mit einer unteren Materialbahn, die unter Wärmeeinwirkung und anschließender Druckbeaufschlagung stoffschlüssig miteinander verbindbar sind, vorgeschlagen mit den Schritten: Bereitstellen eines Schweißautomaten, wie im Rahmen der vorliegenden Offenbarung beschrieben; Überführen der Heizeinrichtung zum zumindest teilweisen Erhitzen der zu verbindenden Materialbahnen in einem Verbindungsbereich von einer Ruheposition in eine Arbeitsposition mittels des Teleskopauszugs; und thermisches Verbinden der Materialbahnen mit dem Schweißautomat.

Demnach wird bei dem Schweißautomat zum thermischen Verbinden von Materialbahnen gemäß einem Aspekt der vorliegenden Erfindung also vorgeschlagen, einen Teleskopauszug bereitzustellen, welcher in Richtung parallel zur Querachse ausziehbar ist. Die Bewegung mit dem Teleskopauszug erfolgt dadurch, dass die Elemente des Teleskopauszugs ineinandergeschoben werden. An dem Teleskopauszug ist eine erste Fahrrolle der zwei Fahrrollen angeordnet. Es können auch ein erster Teleskopauszug für die Heizeinrichtung und ein zweiter Teleskopauszug für die erste Fahrrolle bereitgestellt sein. Mittels eines Teleskopauszugs kann die erste Fahrrolle der zwei Fahrrollen in Richtung parallel zur Querachse bewegt werden. Entsprechend kann die Heizeinrichtung mittels eines Teleskopauszugs in Richtung parallel zur Querachse bewegt werden. Der Teleskopauszug ist derart angeordnet und dazu eingerichtet, dass eine Verschiebung der ersten Fahrrolle quer zu einer Längsachse, d.h. quer zu einer Arbeitsrichtung bzw. Vorschubrichtung des Schweißautomat während des thermischen Verbindens von Materialbahnen erfolgt. Der Teleskopauszug kann eine fest an bzw. in dem Tragrahmen des Schweißautomat angeordnete Aufnahme aufweisen, in welche ein Schaft des Teleskopauszug (vollständig) eingeschoben wird. Dadurch wird der Schaft des Teleskopauszug im eingefahrenen Zustand von der Aufnahme geschützt. Die Erfinder haben erkannt, dass der Einsatz eines Teleskopauszug insbesondere bei einem Schweißautomat zum thermischen Verbinden von Materialbahnen vorteilhaft ist, da ein Wartungsaufwand reduziert werden kann. Im eingefahrenen Zustand kann der Schaft des Teleskopauszug vor Verschmutzungen geschützt sein. Ferner kann eine Korrosion freiliegende Elemente vermieden werden. Dadurch kann die Reparaturanfälligkeit reduziert und die Zuverlässigkeit des Schweißautomaten erhöht werden.

Ein weiterer Vorteil der vorgeschlagenen Lösung kann darin bestehen, dass dank eines in das Gehäuse des Schweißautomat hineinragenden Teleskopauszugs weitere Elemente geschützt im Inneren des Gehäuses des Schweißautomaten angeordnet sein können. Beispielsweise kann ein Anfahrschalter zum Betätigen eines Antriebs des Schweißautomaten nunmehr in das Gehäuseinnere verlagert werden. Dadurch kann dieses weitere Element besser geschützt und dessen Zuverlässigkeit weiter erhöht werden.

Ein weiterer Vorteil der vorgeschlagenen Lösung kann darin bestehen, dass ein einfaches, ergonomisches Einfahren ermöglicht wird. Darüber hinaus kann die Handhabung dahingehend verbessert werden, dass durch den Teleskopauszug etwaiger aus dem Schweißautomat hinausragende Starrachsen vermieden werden können. Hierdurch kann auch die Arbeitssicherheit erhöht werden, da ein Bediener nicht an einem herausragenden Element hängen bleiben kann.

Im Rahmen der vorliegenden Offenbarung kann unter einem Teleskopauszug eine in Längsrichtung ausziehbare Vorrichtung mit zwei oder mehr koaxial ineinanderliegenden Elementen verstanden werden. Jedes der inneren Teleskopteile kann aus dem jeweils nächstgrößeren, der ihn also unmittelbar aufnimmt, axial ausgezogen werden. Mit anderen Worten handelt es sich also nicht lediglich um eine Verschiebung einer Starrachse, sondern um ein Ineinanderschieben von Elementen, wobei sich die Ausdehnung in Längsrichtung im ineinandergeschobenen Zustand reduziert.

Der Teleskopauszug weist eine Achse (im Rahmen der vorliegenden Offenbarung auch als Schaft bezeichnet) auf, wobei die erste Fahrrolle an der Achse des Teleskopauszugs befestigt ist, wobei die Achse in einem ausgefahrenen Zustand aus dem Gehäuse des Tragrahmens herausgezogen ist und in einem eingefahrenen Zustand von dem Gehäuse des Tragrahmens aufgenommen wird, insbesondere vollständig aufgenommen wird bzw. vollständig in das Gehäuse des Tragrahmens eingeschoben ist. In dem die erste Fahrrolle an der Achse des Teleskopauszug befestigt ist, erfolgt die Bewegung somit zusammen mit der Achse des Teleskopauszugs. Es versteht sich, dass die feste Verbindung beispielsweise zu Wartungszwecken gelöst werden kann. Die Achse wird wiederum in das Gehäuse des Tragrahmens eingeschoben und von diesem vorzugsweise vollständig aufgenommen. Dadurch ist die Achse vor Verschmutzungen geschützt und können Korrosionen vermieden werden. Dadurch kann der Wartungsaufwand reduziert werden. Insbesondere bei Betrieb der Heizeinrichtung im eingefahrenen Zustand kann die Reparaturanfälligkeit reduziert werden, da die Achse in der Arbeitsposition, d.h. während des Schweißvorgangs, im Gehäuse eingefahren ist und dadurch weniger anfällig ist auf Korrosion und Staubansammlungen.

Die Heizeinrichtung kann gegenüber dem Tragrahmen um eine Achse parallel zu der Querachse rotierbar angeordnet sein, wobei die Heizeinrichtung zumindest in einer ersten axialen und rotativen Pose gegenüber dem Tragrahmen axial und rotativ festlegbar sein kann und in einer weiteren, von der ersten Pose zumindest axial verschiedenen, zweiten axialen und rotative Pose zumindest axial gegenüber dem Tragrahmen festlegbar sein kann. Bei der Achse kann es sich um eine Achse des weiteren Teleskopauszug handeln, an welche die Heizeinrichtung befestigt ist. Bei der ersten Pose kann es sich um eine Ruheposition der Heizeinrichtung handeln. In der Ruheposition kann die Heizeinrichtung sowohl in axialer Richtung als auch bezüglich der Drehung um die Achse in einer festgelegten Ruheposition festlegbar sein. Bei der zweiten Pose kann es sich um eine Arbeitsposition der Heizeinrichtung handeln. In Arbeitsposition ist die Achse mit der Heizeinrichtung primär axial arretiert. Hingegen kann weiterhin eine Rotationsbewegung, jedenfalls über einen begrenzten Winkelbereich, ermöglicht werden. Dadurch kann sich eine Arbeitshöhe einer Auslassdüse der Heizeinrichtung einem Untergrund anpassen oder können flexibel verschiedene Auslassdüsen eine Heizeinrichtung befestigt werden. Im Falle einer Heizkeileinrichtung können flexibel unterschiedliche Heizkeile eingesetzt werden.

In einer Ausgestaltung kann die Heizeinrichtung durch einen bzw. den weiteren Teleskopauszug am Tragrahmen angeordnet sein. Der weitere Teleskopauszug kann ein an dem Tragrahmen fixiertes Lager und einen Schaft aufweisen. Der Schaft kann sich zwischen einem ersten axialen Schaftende und einem zweiten axialen Schaftende entlang einer zu der Querachse parallelen Schaftachse erstrecken, wobei das zweite axiale Schaftende das von dem Gehäuse abgewandte axiale Schaftende ist. Der Schaft kann entlang der Schaftachse beweglich und um die Schaftachse rotierbar an dem Lager gelagert sein. Die Heizeinrichtung kann in einem Bereich des zweiten axialen Schaftendes an dem Schaft angeordnet sein.

Zu einer Festlegung der Heizeinrichtung in der ersten Pose und/oder in der zweiten Pose kann der Schaft mittels einer Arretierungsvorrichtung des Lagers lösbar an dem Lager fixierbar sein. Die Arretierungsvorrichtung kann zumindest einen Arretierungsbolzen aufweisen, wobei der Arretierungsbolzen in Richtungen einer die Schaftachse senkrecht schneidenden Arretierachse ausgerichtet und in Richtungen der Arretierachse beweglich ist, und wobei der Schaft wenigstens in der ersten Pose und/oder in der zweiten Pose durch einen zumindest teilweisen Eingriff des Arretierungsbolzens radial zur Schaftachse in den Schaft hinein fixierbar ist. Hierbei kann der Arretierungsbolzen in Richtung der Schaftachse durch eine Federkraft beaufschlagt sein. Um in der zweiten Pose in einer Arbeitsposition eine begrenzte Drehbewegung zu ermöglichen kann der Schaft ein Längsloch zum Eingriff des Arretierungsbolzens aufweisen.

An dem zweiten axialen Schaftende kann ein Griffhebel angeordnet sein. Der Griffhebel und der weitere Teleskopauszug können dazu eingerichtet sein, eine manuelle Rotation des Schafts um die Schaftachse bereitzustellen. Der Griffhebel und der weitere Teleskopauszug können dazu eingerichtet sein, eine manuelle Verschiebung des Schafts in Richtungen entlang der Schaftachse bereitzustellen. Der Griffhebel und der weitere Teleskopauszug können dazu eingerichtet sein ein manuelles Lösen einer Fixierung des Schafts vom Lager bereitzustellen.

In einer Weiterbildung kann in einem Inneren des Schafts des weiteren Teleskopauszugs ein Koaxialbolzen aufgenommen sein, wobei der Koaxialbolzen sich parallel zu der Schaftachse zumindest teilweise durch den Schaft hindurch erstreckt, wobei der Koaxialbolzen in Richtungen zu der Schaftachse beweglich ist, wobei der Arretierungsbolzen wenigstens an der ersten Pose und/oder der zweiten Pose zumindest teilweise (in Angriff und/oder) in Eingriff mit dem Koaxialbolzen bringbar ist, und wobei der Arretierungsbolzen durch eine Bewegung des Koaxialbolzens in eine Richtung entlang der Schaftachse relativ zum Schaft (außer Angriff und/oder) außer Eingriff mit dem Koaxialbolzen bringbar ist. Insbesondere kann der Koaxialbolzen derart ausgebildet sein, dass der Arretierungsbolzen durch eine Längsbewegung des Koaxialbolzens in Richtung der Schaftachse außer Eingriff mit dem Koaxialbolzen brennbar ist. Mit anderen Worten kann eine Verriegelung der Schaftachse durch den Arretierungsbolzen durch die Längsbewegung des koaxial Bolzens innerhalb der Schaftachse gelöst werden. Hierdurch kann der Arretierungsbolzen auf einfache Art und Weise betätigt werden. Durch eine derart definierte Betätigung des Arretierungsbolzens kann vorzugsweise eine mechanische Belastung reduziert werden und beispielsweise ein Abbrechen des arretiert Bolzens verhindert werden. Ein weiterer Vorteil kann somit in einer verbesserten Zuverlässigkeit bestehen.

Der Koaxialbolzen kann mit einem axialen Ende über das zweite Schaftende aus dem Schaft heraus über den Schaft überstehen, wobei der Griffhebel an diesem axialen Ende des Koaxialbolzens angeordnet ist, wobei zwischen dem Griffhebel und dem zweiten Schaftende ein Federelement eingespannt ist, wobei durch einen Anschlag im Inneren des Schafts in Kombination mit einem Gegenanschlag des Koaxialbolzens eine Bewegung des Koaxialbolzens entlang der Schaftachse in Richtung des zweiten Schaftendes limitiert wird. Bei einem axialen Ende des Koaxialbolzens kann es sich um eine zum Koaxialbolzen zugehörige Verlängerung des Koaxialbolzens handeln. Mit anderen Worten ist der Koaxialbolzen nicht notwendigerweise einstückig ausgebildet. Optional kann der Griffhebel gegenüber einer Ebene mit einer Normalen parallel zu der Schaftachse mit einem spitzen Winkel zu der Ebene neigbar sein. Ein Vorteil dieser Ausgestaltung kann darin bestehen, dass die Heizeinrichtung (zusammen mit der Achse) durch den Griffhebel am axialen Ende sehr einfach und ergonomisch bewegt werden kann. Zudem kann dieser Griff auch gleichzeitig der Aufhebung der Arretierung dienen. Somit kann die Heizeinrichtung vorzugsweise mit einer Hand ein- und ausgeschwenkt werden.

Der Schweißautomat kann eine Antriebseinrichtung aufweisen. Die Antriebseinrichtung kann mit einem Anfahrschalter gekoppelt sein, welcher dazu eingerichtet ist, ein Freigabesignal für die Antriebseinrichtung bereitzustellen, wobei der Anfahrschalter im Inneren des Gehäuses angeordnet ist und dazu eingerichtet ist durch Einfahren des Teleskopauszugs in das Innere des Gehäuses, insbesondere durch einen einfahrenden Schaft des Teleskopauszugs, betätigt zu werden. Ein Vorteil dieser Ausgestaltung kann darin bestehen, dass der Schalter im Gehäuse untergebracht ist und somit gut vor äußeren Einflüssen geschützt ist. Beispielsweise kann die Achse des Teleskopauszugs im eingefahrenen Zustand im Gehäuse einen elektro-mechanischen Schalter betätigen, welcher ein Signal an eine Steuerung übermittelt, mit welchem der Antrieb (Vorschub des Schweißautomaten) ein- bzw. ausgeschaltet werden kann. Optional kann hierbei eine Verzögerung vorgesehen werden, sodass der Nutzer von einem Griff, mit welchem der Teleskopauszug bedient wird, zu einem Führungsstab zur Führung des Schweißautomaten umgreifen kann.

Die erste Fahrrolle ist durch den Teleskopauszug an dem Tragrahmen angeordnet. Hierbei kann der Teleskopauszug für die Fahrrolle eine Schwalbenschwanz-Führung aufweisen. Es kann sich hierbei um einen zweiten Teleskopauszug für die erste Fahrrolle handeln. Die Heizeinrichtung kann über einen separaten ersten Teleskopauszug in Querrichtung verstellbar am Schweißautomat angeordnet sein. In dem die erste Fahrrolle durch den Teleskopauszug an dem Tagrahmen angeordnet ist, kann die Breite einer Fahrspur angepasst werden. Dabei wird jedoch nicht eine Achse mit beiden Fahrrolle verschoben. Die zweite Fahrrolle auf der Querrichtung gegenüberliegenden Seite kann fest mit dem Rahmen verbunden und nicht verschiebbar sein. Vorzugsweise kann die erste Fahrrolle im eingefahrenen Zustand vollständig im Rahmen verschwinden, sodass nichts mehr seitlicher vorsteht. Hierdurch kann ein randnahes Schweißen ermöglicht werden. Ein Vorteil der Ausgestaltung des Teleskopauszugs für die Fahrrolle als Schwalbenschwanz-Führung kann darin bestehen, dass der Teleskopauszug auch bei einer Querbelastung quer zur Auszugsrichtung besonders leichtgängig gelagert sein kann und gleichzeitig ein minimales Spiel bieten kann, was wiederum die Stabilität und die Führungsgenauigkeit begünstigt.

In einer Weiterbildung kann der Teleskopauszug mit der ersten Fahrrolle zumindest dazu eingerichtet sein, bei einem minimalen Abstand der Fahrrolle zur Längsmitte des Tragrahmens parallel zu der Querachse in eine Richtung parallel zu der Querachse nicht über den Tragrahmen überzustehen. Der Teleskopauszug mit der ersten Fahrrolle kann dazu eingerichtet sein, mit einem von der Längsmitte abgewandten axialen Auslegerende bündig mit dem Tragrahmen abzuschließen. Hierdurch können besonders randnahe Schweißvorgänge ermöglicht werden.

Der Schweißautomat kann ferner eine Justageeinrichtung zum Einstellen Spur zumindest einer der Fahrrollen aufweisen. Ein Vorteil dieser Ausgestaltung kann darin bestehen, dass ein Geradeauslauf verbessert werden kann. Beispielsweise kann an einer zweiten Fahrrolle, welche dem Teleskopauszug mit der ersten Fahrrolle in parallel zur Querachse des Fahrgestells gegenüberliegt, eine Einstellschraube vorgesehen sein, mittels welcher die Spur bzw. der Geradeauslauf des Schweißautomaten eingestellt werden kann.

Die vorstehend für den ersten Aspekt der Erfindung ausführlich beschriebenen Vorteile gelten für die weiteren Aspekte der Erfindung entsprechend.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Beispielhafte Ausführungsformen der Erfindung sind in nachfolgenden Zeichnungen dargestellt und werden in der nachfolgenden Beschreibung näher erläutert.

Es zeigen:
- Fig. 1: eine perspektivische schematische Darstellung eines bodennahen Schweißautomaten in einer Arbeitsposition;
- Fig. 2: eine weitere perspektivische schematische Darstellung des bodennahmen Schweißautomaten aus Fig. 1 in einer Ruheposition;
- Fig. 3: eine Frontansicht des Schweißautomaten aus Fig. 1 in der Arbeitsposition;
- Fig. 4: eine Frontansicht des Schweißautomaten aus Fig. 2 in der Ruhe;
- Fig. 5: eine perspektivische schematische Darstellung eines Teleskopauszugs für eine Heizeinrichtung für einen Schweißautomaten in einem eingefahrenen Zustand,
- Fig. 6: eine perspektivische schematische Darstellung des Teleskopauszugs aus Fig. 5 in einem ausgefahrenen Zustand,
- Fig. 7: eine Seitenansicht des Teleskopauszugs aus Fig. 5. in eingefahrenem Zustand und Betätigung eines Anfahrschalters mit geschlossenem Anfahrschalter;
- Fig. 8: eine Seitenansicht des Teleskopauszugs aus Fig. 5. in ausgefahrenem Zustand mit offenem Anfahrschalter;
- Fig. 9: eine Schnittdarstellung des Teleskopauszugs aus Fig. 7 entlang Achse IX-IX;
- Fig. 10: eine Schnittdarstellung des Teleskopauszugs aus Fig. 7 entlang Achse X-X;
- Fig. 11: eine perspektivische Darstellung eines Schweißautomaten mit einem Teleskopauszug für eine Fahrrolle;
- Fig. 12: eine perspektivische Darstellung eines Ausschnitts des Schweißautomaten mit Fahrrolle in einem ausgefahrenen Zustand;
- Fig. 13: eine perspektivische Darstellung eines Ausschnitts des Schweißautomaten mit Fahrrolle in einem eingefahrenen Zustand;
- Fig. 14: eine weitere perspektivische Darstellung eines Ausschnitts des Schweißautomaten mit Fahrrolle in einem ausgefahrenen Zustand aus Fig. 12;
- Fig. 15: eine weitere perspektivische Darstellung eines Ausschnitts des Schweißautomaten mit Fahrrolle in einem eingefahrenen Zustand aus Fig. 14;
- Fig. 16: eine Seitenansicht auf mit einem Teleskopauszug für eine Fahrrolle mit einer Schwalbenschwanz-Führung;
- Fig. 17: zeigt eine Frontansicht eines Ausschnitts des Schweißautomaten mit Fahrrolle in einem ausgefahrenen Zustand;
- Fig. 18: zeigt eine Frontansicht eines Ausschnitts des Schweißautomaten mit Fahrrolle in einem eingefahrenen Zustand;
- Fig. 19: eine perspektivische Ansicht einer zweiten festen Fahrrolle mit Justageeinrichtung zur Spureinstellung;
- Fig. 20: ein Flussdiagramm eines Verfahrens zum thermischen Verbinden von Materialbahnen.

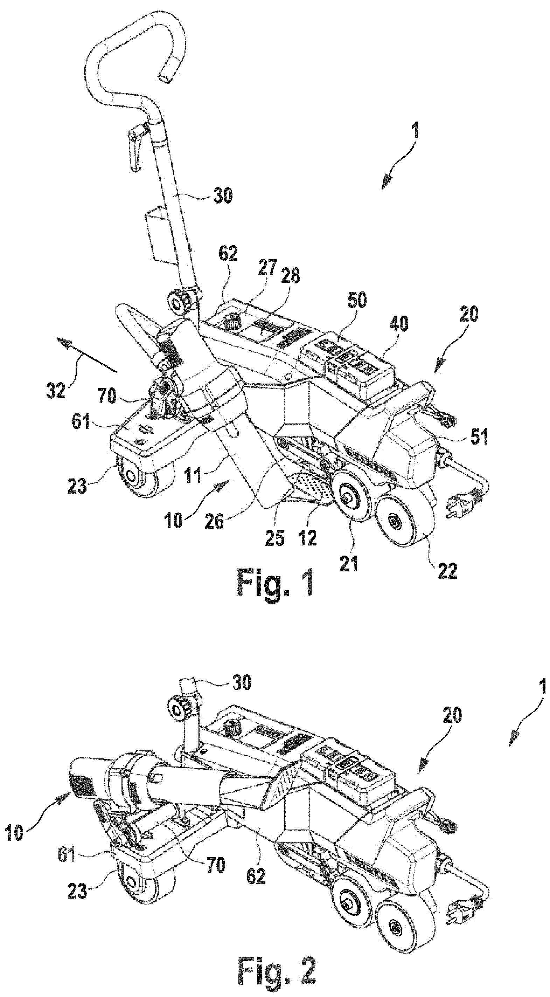

Fig. 1 und Fig. 2 zeigen perspektivische schematischen Darstellung eines beispielhaften Schweißautomat 1 zum thermischen Verbinden von Materialbahnen. Der Schweißautomat 1 ist eingerichtet zum randseitigen Verbinden von einer überlappenden oberen Materialbahn mit einer unteren Materialbahn, die unter Wärmeeinwirkung und anschließender Druckbeaufschlagung stoffschlüssig miteinander verbindbar sind. Der Schweißautomat 1 weist eine Heizeinrichtung 10 und ein Fahrgestell 20 auf mit einem Führungsstab 30 zum Führen des Schweißautomaten auf.

Die Heizeinrichtung 10 ist eingerichtet zum zumindest teilweisen Erhitzen der zu verbindenden Materialbahnen in einem Verbindungsbereich. In dem gezeigten Ausführungsbeispiel ist die Heizeinrichtung 10 als Heißluftgebläse mit einem Gebläsekörper 11 mit innenliegendem Heizelement und einem Lüfter zum Erzeugen eines Luftvolumenstroms und einer Heißluftdüse 12 ausgebildet. In Fig. 1 befindet sich die Heizeinrichtung 10 in einer Arbeitsposition. In Fig. 2 befindet sich die Heizeinrichtung hingegen in einer Ruheposition, vorzugsweise seitlich ausgefahren und nach oben gekippt. In der Arbeitsposition ist die Heißluftdüse in einem Überlappungsbereich zwischen eine obere Materialbahn und eine untere Materialbahn (nicht dargestellt) eingeführt. Dadurch kann die Heizeinrichtung eine Unterseite der oberen Materialbahn und eine Oberseite der unteren Materialbahn erhitzen und insbesondere zumindest teilweise plastifizieren bzw. anschmelzen. Alternativ kann die Heizeinrichtung 10 als Heizkeileinrichtung mit einem elektrisch erhitzbaren Heizkeil ausgebildet sein.

Insbesondere bei Dachabdichtungen werden die Materialbahnen wie z.B. Dichtungsbahnen mit sogenannten bodennahen Heißluftschweißautomaten in ihrem Überlappungsbereich verschweißt. Dabei gleitet eine an einem Heißluftgebläse angebrachte Heißluftdüse zwischen die überlappenden Materialbahnen. Diese Düse bzw. das ganze Heißluftgebläse soll beim Schweißanfang bzw. -ende in die Überlappung ein- bzw. ausgefahren werden. Dafür ist eine kann eine sogenannte Einfahrvorrichtung zuständig sein, welche das Heißluftgebläse kontrolliert zwischen einer Ruheposition (Fig. 2) und einer Arbeitsposition (Fig. 1) hin und her bewegt. Dabei wird das Heißluftgebläse üblicherweise entlang einer Querachse seitlich (axial) verschoben und gleichzeitig um eine Achse gedreht (rotativ).

Eine Arbeitsfahrrichtung des Schweißautomaten 1 ist in Fig. 1 mit einem Pfeil dargestellt und mit Bezugszeichen 32 bezeichnet. Die Arbeitsfahrrichtung bezeichnet hierbei eine Vorschubrichtung, in welcher der Schweißautomat 1 im Betrieb zum randseitigen Verbinden entlang der überlappenden Materialbahnen geführt wird. Das Fahrgestell 20 weist eine Andruckrolle 21 auf, welche dazu eingerichtet ist, die Materialbahnen in Arbeitsrichtung hinter der Heizeinrichtung 10 mit Druck zu beauftragen. Die Andruckrolle 21 kann auch gleichzeitig als Antriebsrolle ausgeführt sein, welche den Schweißautomat 1 automatisch antreibt. Im gezeigten Ausführungsbeispiel ist jedoch eine optionale separate Antriebrolle 22 vorgesehen. Im gezeigten Ausführungsbeispiel weist das Fahrgestell ferner eine erste Laufrolle 23 und eine zweite Laufrolle 24 auf. Die Laufrollen sind in Arbeitsfahrtrichtung 32 vorne angeordnet. Die erste Laufrolle 23 kann daher als linke Laufrolle bezeichnet werden, die zweite Laufrolle 24 kann als rechte Laufrolle bezeichnet werden.

Um die Luftführung bzw. den Wärmeeintrag zwischen den überlappenden Materialbahnen weiter zu verbessern kann optional ein Andruckriemen 23 vorgesehen sein. Der Andruckriemen 23 erstreckt sich, zum Andrücken des Randes einer in der Figur nicht gezeigten überlappenden oberen Materialbahn an eine ebenfalls nicht abgebildete überlappte untere Materialbahn, von zwischen der Andruckrolle 21 bis zu einer vorzugweise spannbaren Riemenführungsscheibe 24, die in Arbeitsrichtung neben bzw. vor der Heißluftdüse angeordnet ist. Der Andruckriemen 23 kann dazu eingerichtet sein, den überlappenden Rand der oberen Materialbahn gegen die untere Materialbahn zu drücken und verhindert somit, dass der Heißluftstrom aus der Heißluftdüse 12 unter die überlappende obere Materialbahn dringt. Durch die seitliche Abdichtung des überlappenden Randes kann eine Verlustleistung verringert werden und kann der Heißluftstrom entgegen der Arbeitsfahrtrichtung des Schweißautomaten 1 geführt werden.

Wie in dem in Fig. 1 und Fig. 2 dargestellten Ausführungsbeispiel gezeigt, kann der Schweißautomat 1 ferner eine Steuerung 27 (auch als Steuereinheit bezeichnet) und eine Anzeigeeinheit 28 aufweisen. Im vorliegenden Ausführungsbeispiel sind die Steuerung 27 und die Anzeigeeinheit 28 auf einer Oberseite des Schweißautomaten angeordnet. Es versteht sich, dass die Steuerung 27 und/oder Anzeigeeinheit 28 jedoch auch als drahtlose Einheiten ausgebildet sein können, welche über eine Kommunikationsschnittstelle mit dem Schweißautomat verbunden sind. Beispielsweise kann ein Smartphone oder Tablet als mit einer entsprechenden Software als Anzeigeeinheit 28 oder als Bedieninterface für eine Steuerung genutzt werden.

Der Schweißautomat 1 kann ferner eine Aufnahme 40 für ein oder mehrere Zusatzgewichte 50 aufweisen, welche dazu eingerichtet sind, einen Druck auf die Andruckrolle 21 zu erhöhen. Fig. 1 zeigt eine perspektivische Darstellung des Schweißautomat 1 mit einem Zusatzgewicht 50. Ferner kann der Schweißautomat 1 auch ein fest eingebautes Gewicht 51 aufweisen, durch welchen ein minimaler Anpressdruck ohne Zusatzgewichte definiert wird.

Wie in Fig. 1 bis Fig. 3 gezeigt, wird das Fahrgestell 20 gebildet durch einen Tragrahmen 61 mit einem Gehäuse 62 sowie durch die Andruckrolle 21 und die beiden Fahrrollen 23, 24. Das Fahrgestell weist hierbei eine Längsachse parallel zur Arbeitsrichtung 32 und eine dazu senkrechte Querachse auf, welche eine Fahrgestellebene aufspannen. Zumindest eine Fahrrolle 24 der zwei Fahrrollen 23, 24 ist mittels eines Teleskopauszugs 80 gegenüber dem Tragrahmen 61 mit dem Gehäuse 62 beweglich angeordnet. Zusätzlich kann die Heizeinrichtung 10 mittels eines weiteren Teleskopauszugs 70 gegenüber dem Tragrahmen 61 mit dem Gehäuse 62 beweglich angeordnet sein. Mit anderen Worten können die Heizeinrichtung 61 und/oder die Fahrrolle 24 quer zur Antriebsrichtung 32 mit einem Teleskopauszug ausgefahren werden.

In dem mit Bezug auf Fig. 1 bis Fig. 10 beschriebenen Ausführungsbeispiel ist die Heizeinrichtung 10 durch den Teleskopauszug 70 in Querrichtung beweglich am Tragrahmen 61 mit dem Gehäuse 62 angeordnet.

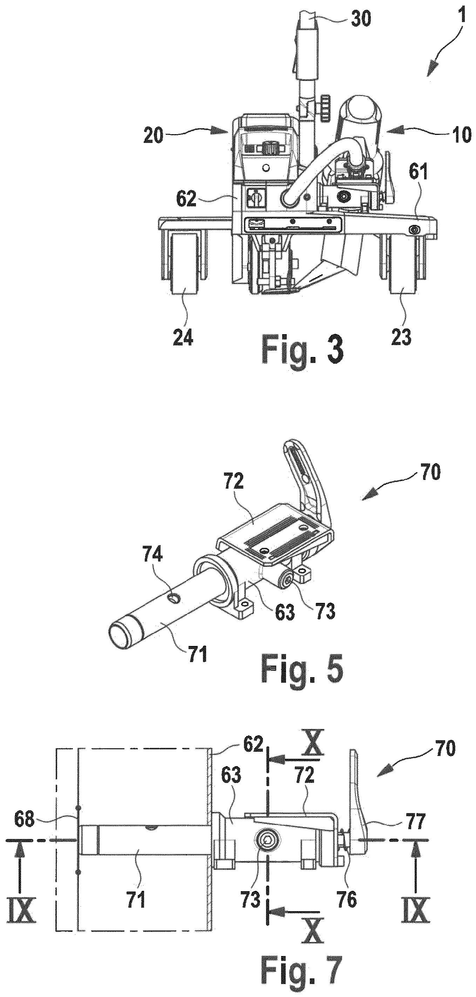

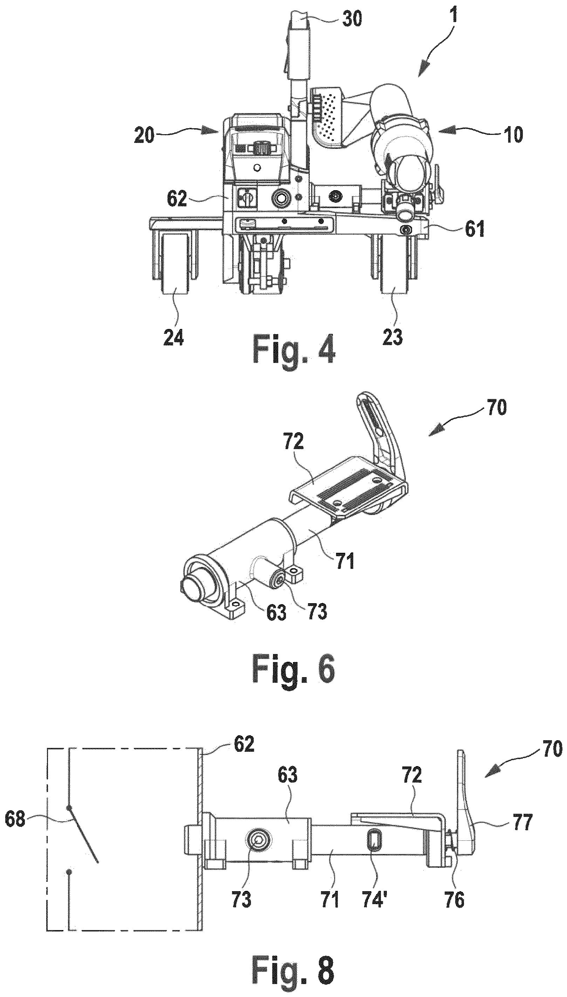

Dabei zeigen die ungeraden Fig. 1, Fig. 3, Fig. 5, Fig. 7 sowie Fig. 9 und Fig. 10 den Schweißautomat oder Teile davon mit dem Teleskopauszug in einem eingefahrenen Zustand in einer Arbeitsposition. Die geraden Fig. 2, Fig. 4, Fig. 6 und Fig. 8 zeigen demgegenüber den Schweißautomat oder Teile davon mit dem Teleskopauszug in einem ausgefahrenen Zustand in einer Ruheposition. Die Fig. 3 und Fig. 4 zeigen eine Frontansicht des Schweißautomaten 1 in einer Arbeitsposition mit eingefahrenem Teleskopauszug 70 für die Heizeinrichtung 10 (Fig. 3) gegenüber einer Frontansicht des Schweißautomaten 1 in einer Ruheposition mit ausgefahrenem Teleskopauszug 70 für die Heizeinrichtung 10 (Fig. 4). Die Fig. 5 und Fig. 6 zeigen eine perspektivische schematische Darstellung eines Teleskopaus-zugs für eine Heizeinrichtung für einen Schweißautomaten in einem eingefahrenen Zustand (Fig. 5) bzw. in einem ausgefahrenen Zustand (Fig. 6). Entsprechend zeigen Fig. 7 eine Seitenansicht des Teleskopauszugs 70 aus Fig. 5. in einem in das Gehäuse 62 eingefahrenem Zustand und Fig. 8 eine Seitenansicht des Teleskopauszugs aus Fig. 5. in einem aus dem Gehäuse 62 ausgefahrenem Zustand.

Der Teleskopauszug 70 weist eine Achse 71 auf, wobei die Heizeinrichtung 10 fest an der Achse 71 des Teleskopauszugs 70 befestigt ist. In dem gezeigten Ausführungsbeispiel ist an der Achse 71 eine Anschlussplatte 72 angeordnet. Die Heizeinrichtung 10 kann beispielsweise mittels einer Verschraubung fest, aber lösbar an der Anschlussplatte 72 befestigt werden. Das Gehäuse 62 kann ein fest an oder in dem Gehäuse angeordnetes Lagergehäuse 63 aufweisen. Das Lagergehäuse 63 ist gleichzeitig Teil des Teleskopauszugs und dient zusammen mit dem weiteren Gehäuse 62 der Aufnahme des Teleskopauszugs in dem eingefahrenen Zustand, wie beispielsweise in Fig. 3 und Fig. 7 gezeigt.

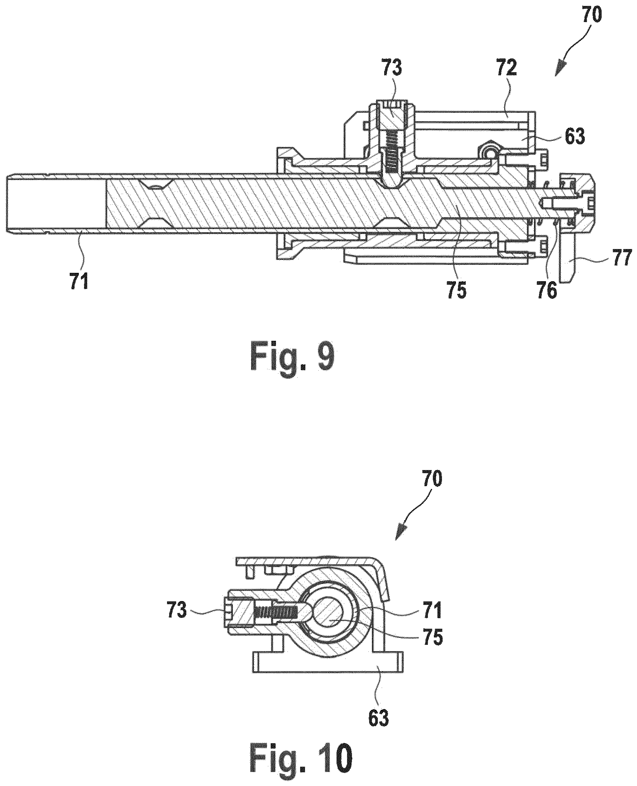

Die Achse 71 kann in dem festen Lagergehäuse 63 verschieb- und drehbar gelagert sein. Um die Heizeinrichtung 10 kontrolliert zwischen der Ruheposition (Fig. 2, Fig. 4) und der Arbeitsposition (Fig. 1, Fig. 3) hin und her zu bewegen, wird die Heizeinrichtung 10 entlang der Achse 71 axial verschoben und gleichzeitig rotativ um die Achse gedreht. In der Ruheposition (Fig. 2, Fig. 4) kann die Achse 71 des Teleskopauszugs 70 sowohl axial als auch rotativ arretiert sein. Im gezeigten Ausführungsbeispiels ist hierfür ist einen am Lagergehäuse 63 angebrachter, radialer, gefederter Arretierungsbolzen 73 vorgesehen, der in eine an der Achse 71 angebrachten Bohrung 74, 74' einrasten kann. In einer Weiterbildung kann die Arretierung wird aufgehoben, indem ein axial in die Achse eingelassener, vorzugsweise gefederter Langbolzen 75 den Arretierungsbolzen 73 aus der Bohrung 74, 74' hinaus drückt, wie bespielhaft in Fig. 9 und Fig. 10 dargestellt. Der Langbolzen 75 wird auch als Koaxialbolzen bezeichnet, da er koaxial in der Achse 71 angeordnet ist.

In der Ruheposition (siehe Fig. 2, Fig. 4) als eine erste axiale und rotative Pose gegenüber dem Tragrahmen ist die Heizeinrichtung mittels des vorgeschlagenen Teleskopauszugs sowohl axial als auch rotativ festlegbar. Hierbei kann, wie in Fig. 5 gezeigt eine Bohrung 74 in der Achse 71 vorgesehen sein, deren Größe in einer Längs- und Querrichtung an eine Größe des Arretierungsbolzens 73 angepasst ist. Damit ist die die Achse sowohl axial als auch rotativ festgelegt. Demgegenüber ist es in der Arbeitsposition (siehe Fig. 1, Fig. 3) wünschenswert, wenn die Heizeinrichtung 10 mittels des Teleskopauszugs zwar axial arretiert ist, rotativ jedoch über einen gewissen Winkelbereich eine Drehbewegung ermöglicht. Wie beispielsweise in Fig. 8 gezeigt, kann die Bohrung 74' daher als ein Langloch statt als eine (runde) Bohrung ausgeführt sein. Die Aufhebung der Arretierung kann mit dem gleichen Langbolzen bzw. Koaxialbolzen 75 erfolgen, wobei aber eine andere Aussparung zum Zug kommt. Wie in Fig. 9 und Fig. 10 gezeigt, ist der Arretierungsbolzen 73 durch die Bohrung 74' in eine Ausnehmung des Koaxialbolzens geführt. Wenn der Koaxialbolzen in axialer Richtung der Achse 71 in Richtung des Gehäuses 62 (siehe z.B. Fig. 8) gedrückt wird, kann der Arretierungsbolzen 73 beispielsweise durch eine angeschrägte Seitenwand einer Vertiefung im Koaxialbolzen radial nach außen gedrückt werden. Die Arretierung kann damit auf einfache Art und Weise gelöst werden.

Wie in Fig. 9 gezeigt ist an einem nach außen weisenden Ende der Achse 71 mit dem Koaxialbolzen 75 ein Griff 77 vorgesehen. Der Schweißautomat ist dazu eingerichtet, dass mit dem Griff 77 einerseits die Heizeinrichtung 10 mit der Achse 71 des Teleskopauszugs 70 bewegt werden kann. Zudem dient der Griff 77 der Aufhebung der Arretierung, da der Griff 77 mit dem Koaxialbolzen 75 verbunden ist. Der Griff 77 mit dem Koaxialbolzen 75 kann mittels einer Feder 76 an der Achse 71 abgestützt sein. Wenn der Griff 77 nicht betätigt ist, sorgt die Feder 76 dafür, dass der Koaxialbolzen derart positioniert ist, dass die Arretierungsbolzen in die Vertiefungen des Koaxialbolzens 75 eintauchen und eine sichere Arretierung ermöglicht wird.

Der Schweißautomat weist vorzugsweise eine Antriebseinrichtung zum automatischen Vortrieb auf. Es wäre wünschenswert, wenn in der Ruheposition sichergestellt werden kann, dass sich der Schweißautomat nicht automatisch in Bewegung setzt bzw. nicht versehentlich betätigt wird. Die Antriebseinrichtung kann daher mit einem Anfahrschalter gekoppelt sein, welcher dazu eingerichtet ist, ein Freigabesignal für die Antriebseinrichtung bereitzustellen. Hierbei kann es sich um ein Steuersignal handeln. Alternativ kann durch den Anfahrschalter eine Stromversorgung zur Antriebseinrichtung hergestellt bzw. unterbrochen werden. Fig. 7 und 8 zeigen eine vorteilhafte schematische Anordnung eines Anfahrschalters 68, wobei der Anfahrschalter im Inneren des Gehäuses 62 angeordnet ist. Hierdurch ist der Anfahrschalter geschützt und kann das Risiko einer Fehlfunktion reduziert werden. In der Ruheposition, wie in Fig. 4 und Fig. 8 gezeigt, ist der Anfahrschalter offen. In der Arbeitsposition, wie in Fing. 3 und 7 gezeigt ist der Anfahrschalter geschlossen. Dabei wird der Anfahrschalter in dem gezeigten Ausführungsbeispiel durch die eingefahrene Achse 71 des Teleskopauszugs 70 betätigt. Im eingefahrenen Zustand kann die Achse im Gehäuse beispielsweise einen elektro-mechanischen Schalter betätigen, welcher ein Signal an die Steuerung übermittelt, mit welchem der Antrieb (Vorschub) des Schweißautomaten ein- bzw. ausschaltet werden kann: Optional kann eine Verzögerung vorgesehen sein, damit der Bediener zum Führungsstab umgreifen kann.

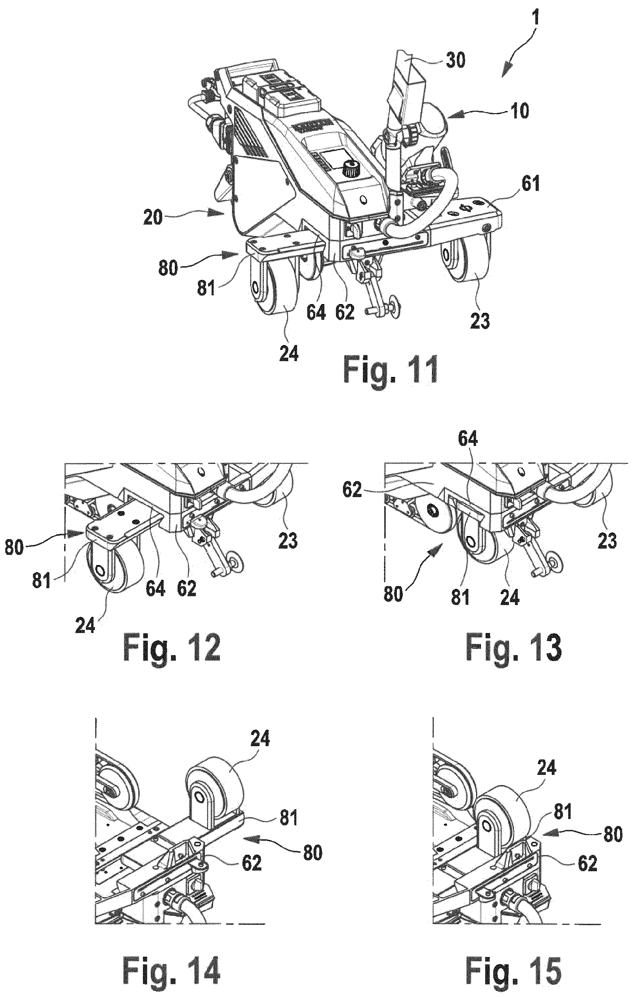

In dem mit Bezug auf Fig. 11 bis Fig. 18 beschriebenen Ausführungsbeispiel ist die Fahrrolle 24 durch den Teleskopauszug 80 in Querrichtung beweglich am Tragrahmen 61 mit dem Gehäuse 62 angeordnet. Optional kann zusätzlich zum dem Teleskopauszug 80 für die Fahrrolle 24 ein weiterer Teleskopauszug 70 für die Heizeinrichtung 10 vorgesehen sein. Hierbei zeigen Fig. 11, Fig. 12, Fig. 14 und Fig. 17 den Teleskopauszug 80 in einem ausgefahrenen Zustand. Die Fig. 13, Fig. 15 und Fig. 18 zeigen den Teleskopauszug 80 in einem eingefahrenen Zustand. Ein Vorteil dieses Ausführungsbeispiels kann darin bestehen, dass die Auflage mit der Fahrrolle im Bedarfsfall, beispielsweise zum Transport oder bei engen Arbeitsplatzverhältnissen, mittels des Teleskopauszugs 80 vollständig ins Automatengehäuse eingefahren werden kann. Im ausgefahrenen Zustand können hingegen eine hohe Stabilität und gute Geradeaus-Fahreigenschaften bereitgestellt werden.

Der Teleskopauszug 80 weist eine Achse 81 auf, wobei die Fahrrolle 24 an einem in Querrichtung äußeren Ende der Achse 81 angeordnet ist. Das Gehäuse 62 kann ein fest an oder in dem Gehäuse angeordnetes Lagergehäuse 64 aufweisen. Das Lagergehäuse 64 ist gleichzeitig Teil des Teleskopauszugs und dient zusammen mit dem weiteren Gehäuse 62 der Aufnahme des Teleskopauszugs in dem eingefahrenen Zustand, wie beispielsweise in Fig. 13 gezeigt. Die andere Fahrrolle 23 ist (in Querrichtung auf der gegenüberliegenden Seite) fest mit dem Fahrgestell verbunden, insbesondere mit einem Tragrahmen 61 des Fahrgestells. Die fest verbundene Fahrrolle 23 kann eine Stabilität und Spurtreue des Schweißautomaten weiter verbessern, da keine beweglichen oder verschiebbaren Elemente erforderlich sind.

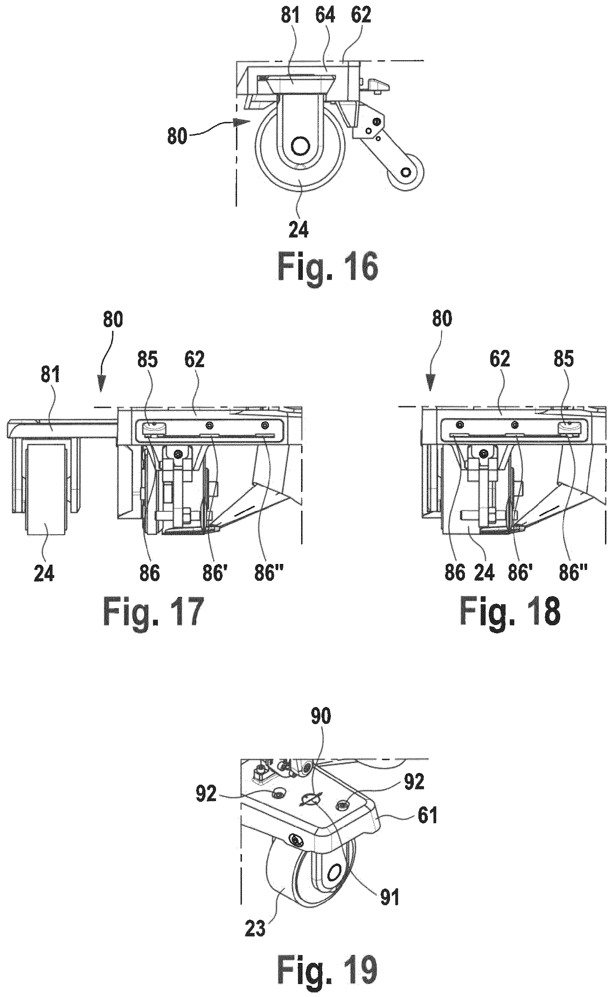

Wie in Fig. 16 gezeigt, kann der Teleskopauszug 80 für die Fahrrolle 24 eine Schwalbenschwanz-Führung aufweisen. Ein Vorteil der Ausgestaltung des Teleskopauszugs für die Fahrrolle als Schwalbenschwanz-Führung kann darin bestehen, dass der Teleskopauszug auch bei einer Querbelastung quer zur Auszugsrichtung besonders leichtgängig gelagert sein kann und gleichzeitig ein minimales Spiel bieten kann, was wiederum die Stabilität und die Führungsgenauigkeit begünstigt.

Wie in Fig. 17 und Fig. 18 gezeigt, kann der Teleskopauszug 80 optional einen Betätigungshebel 85 aufweisen, mit welchem in Längsrichtung des Teleskopauszugs 80 verschiedene Positionen 86, 86', 86" einstellbar sind. Beispielsweise kann an der Achse 81 ein Blech montiert sein, welches je nach seitlicher Position in zugehörige Einsparungen am Gehäuse 62 einrasten kann. Damit lassen sich vordefinierte seitliche Positionen (in diesem Fall drei) wiederholbar genau einstellen.

Fig. 19 zeigt eine perspektivische Ansicht einer zweiten festen Fahrrolle 23 mit einer Justageeinrichtung 90 zur Spureinstellung. Die Justageeinrichtung 90 kann eine Anzeige 91 aufweisen, welche eine Ausrichtung der Fahrrolle 23 anzeigt. Die Ausrichtung bzw. Spur der Fahrrolle kann beispielsweise mittels einer oder mehreren Einstellschrauben 92 eingestellt werden.

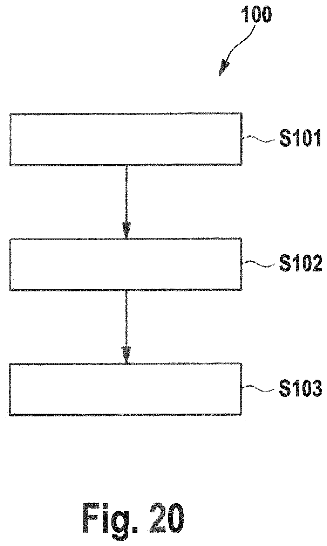

Fig. 20 zeigt ein Flussdiagramm 100 eines Verfahrens zum thermischen Verbinden von Materialbahnen, insbesondere zum randseitigen Verbinden von einer überlappenden oberen Materialbahn mit einer unteren Materialbahn, die unter Wärmeeinwirkung und anschließender Druckbeaufschlagung stoffschlüssig miteinander verbindbar sind. In einem ersten Schritt S101 wird ein Schweißautomat, wie im Rahmen der vorliegenden Offenbarung beschrieben, bereitgestellt. In einem zweiten Schritt S102 wird die Heizeinrichtung 19 zum zumindest teilweisen Erhitzen der zu verbindenden Materialbahnen in einem Verbindungsbereich von einer Ruheposition in eine Arbeitsposition mittels des Teleskopauszugs überführt. In einem dritten Schritt S102 werden die Materialbahnen mit dem Schweißautomat thermisch verbunden.

Zusammenfassend kann mit den hierin vorgeschlagenen Lösungen ein verbesserter Schweißautomat zum thermischen Verbinden von Materialbahnen, insbesondere zum randseitigen Verbinden von einer überlappenden oberen Materialbahn mit einer unteren Materialbahn, die unter Wärmeeinwirkung und anschließender Druckbeaufschlagung stoffschlüssig miteinander verbindbar sind, bereitgestellt werden. Die vorgeschlagene Lösung ermöglicht es, einen Schweißautomat mit einfacher Handhabung bereitzustellen und/oder einen Wartungsaufwand zu reduzieren. Ferne kann gegenüber vollautomatischen Absenk- und Einschwenkeinrichtungen die Fertigungskomplexität in der Herstellung reduziert werden.

## Patentansprüche

1. Schweißautomat (1) zum thermischen Verbinden von Materialbahnen, insbesondere zum randseitigen Verbinden von einer überlappenden oberen Materialbahn mit einer unteren Materialbahn, die unter Wärmeeinwirkung und anschließender Druckbeaufschlagung stoffschlüssig miteinander verbindbar sind, mit
- einer Heizeinrichtung (10) zum zumindest teilweisen Erhitzen der zu verbindenden Materialbahnen in einem Verbindungsbereich,
- einem Tragrahmen (61) mit einem Gehäuse (62),
- einer Andruckrolle (21),
- wenigstens zwei Fahrrollen (23, 24),
wobei die Andruckrolle (21) und die Fahrrollen (23, 24) an dem Tragrahmen (61) angeordnet sind und zusammen mit dem Tragrahmen ein Fahrgestell (20) ausbilden, wobei das Fahrgestell (20) eine Längsachse und eine dazu senkrechte Querachse aufweist, die eine Fahrgestellebene aufspannen,
wobei zumindest eine erste Fahrrolle (24) der zwei Fahrrollen (23, 24) gegenüber dem Tragrahmen (61) mittels eines Teleskopauszugs (80) in Richtungen parallel zu der Querachse beweglich angeordnet ist,
wobei die erste Fahrrolle (24) und die Heizeinrichtung (10) bezüglich einer Längsmitte des Fahrgestells auf gegenüberliegenden Seiten des Fahrgestells (20) angeordnet sind;
wobei der Teleskopauszug (80) eine Achse (81) aufweist, wobei die erste Fahrrolle (24) an der Achse (81) des Teleskopauszugs befestigt ist, wobei die Achse in einem ausgefahrenen Zustand aus dem Gehäuse (62) des Tragrahmens (61) herausgezogen ist und in einem eingefahrenen Zustand von dem Gehäuse (62) des Tragrahmens (61) aufgenommen wird; und wobei die Elemente des Teleskopauszugs ineinandergeschoben werden.

2. Schweißautomat nach einem der vorhergehenden Ansprüche, wobei die Heizeinrichtung (10) gegenüber dem Tragrahmen (61) um eine Achse parallel zu der Querachse rotierbar angeordnet ist, wobei die Heizeinrichtung (10) zumindest in einer ersten axialen und rotativen Pose gegenüber dem Tragrahmen (61) axial und rotativ festlegbar ist und in einer weiteren, von der ersten Pose zumindest axial verschiedenen, zweiten axialen und rotative Pose zumindest axial gegenüber dem Tragrahmen (61) festlegbar ist.

3. Schweißautomat nach Anspruch 2, wobei die Heizeinrichtung (10) durch einen weiteren Teleskopauszug (70) am Tragrahmen (61) angeordnet ist,
wobei der weitere Teleskopauszug ein an dem Tragrahmen fixiertes Lager (72) und einen Schaft (71) aufweist,
wobei sich der Schaft zwischen einem ersten axialen Schaftende und einem zweiten axialen Schaftende entlang einer zu der Querachse parallelen Schaftachse erstreckt,
wobei das zweite axiale Schaftende das von dem Gehäuse (62) abgewandte axiale Schaftende ist,
wobei der Schaft entlang der Schaftachse beweglich und um die Schaftachse rotierbar an dem Lager gelagert ist, und
wobei die Heizeinrichtung (10) in einem Bereich des zweiten axialen Schaftendes an dem Schaft angeordnet ist.

4. Schweißautomat nach Anspruch 3, wobei zu einer Festlegung der Heizeinrichtung (10) in der ersten Pose und/oder in der zweiten Pose der Schaft mittels einer Arretierungsvorrichtung (73) des Lagers (72) lösbar an dem Lager fixierbar ist.

5. Schweißautomat nach Anspruch 4, wobei die Arretierungsvorrichtung zumindest einen Arretierungsbolzen (73) aufweist,
wobei der Arretierungsbolzen in Richtungen einer die Schaftachse senkrecht schneidenden Arretierachse ausgerichtet und in Richtungen der Arretierachse beweglich ist, und
wobei der Schaft (71) wenigstens in der ersten Pose und/oder in der zweiten Pose durch einen zumindest teilweisen Eingriff des Arretierungsbolzens (73) radial zur Schaftachse in den Schaft hinein fixierbar ist; insbesondere wobei der Arretierungsbolzen in Richtung der Schaftachse durch eine Federkraft (76) beaufschlagt ist.

6. Schweißautomat nach einem oder mehreren der Ansprüche 2 bis 5, wobei an dem zweiten axialen Schaftende ein Griffhebel (77) angeordnet ist, welcher dazu eingerichtet ist, eine manuelle Rotation des Schafts (71) um die Schaftachse, eine manuelle Verschiebung des Schafts in Richtungen entlang der Schaftachse und/oder ein manuelles Lösen einer Fixierung des Schafts (71) vom Lager (72) bereitzustellen.

7. Schweißautomat nach Anspruch 5, wobei in einem Inneren des Schafts (71) des weiteren Teleskopauszugs (70) ein Koaxialbolzen (75) aufgenommen ist,
wobei der Koaxialbolzen (75) sich parallel zu der Schaftachse zumindest teilweise durch den Schaft (71) hindurch erstreckt,
wobei der Koaxialbolzen (75) in Richtungen zu der Schaftachse beweglich ist,
wobei der Arretierungsbolzen (73) wenigstens an der ersten Pose und/oder der zweiten Pose zumindest teilweise in Eingriff mit dem Koaxialbolzen (75) bringbar ist, und
wobei der Arretierungsbolzen (73) durch eine Bewegung des Koaxialbolzens (75) in eine Richtung entlang der Schaftachse relativ zum Schaft (71) außer Eingriff mit dem Koaxialbolzen bringbar ist.

8. Schweißautomat nach Anspruch 7, wobei der Koaxialbolzen (75) mit einem axialen Ende über das zweite Schaftende aus dem Schaft heraus über den Schaft (71) übersteht,
wobei der Griffhebel (77) an diesem axialen Ende des Koaxialbolzens (75) angeordnet ist, wobei zwischen dem Griffhebel (77) und dem zweiten Schaftende ein Federelement (76) eingespannt ist,
wobei durch einen Anschlag im Inneren des Schafts (71) in Kombination mit einem Gegenanschlag des Koaxialbolzens (75) eine Bewegung des Koaxialbolzens entlang der Schaftachse in Richtung des zweiten Schaftendes limitiert wird.

9. Schweißautomat nach einem der vorhergehenden Ansprüche,
wobei der Schweißautomat (1) eine Antriebseinrichtung (22) aufweist,
wobei die Antriebseinrichtung mit einem Anfahrschalter (68) gekoppelt ist, welcher dazu eingerichtet ist, ein Freigabesignal für die Antriebseinrichtung bereitzustellen, wobei der Anfahrschalter (68) im Inneren des Gehäuses (62) angeordnet ist und dazu eingerichtet durch Einfahren des Teleskopauszugs in das Innere des Gehäuses (62), insbesondere durch einen einfahrenden Schaft des Teleskopauszugs, betätigt zu werden.

10. Schweißautomat nach einem der vorhergehenden Ansprüche, wobei die erste Fahrrolle (24) durch den Teleskopauszug (80) an dem Tragrahmen (61) angeordnet ist, wobei der Teleskopauszug für die Fahrrolle (24) eine Schwalbenschwanz-Führung aufweist.

11. Schweißautomat nach Anspruch 10, wobei der Teleskopauszug (80) mit der ersten Fahrrolle (24) dazu eingerichtet ist, zumindest bei einem minimalen Abstand der Fahrrolle (24) zur Längsmitte des Tragrahmens (61) parallel zu der Querachse in eine Richtung parallel zu der Querachse nicht über den Tragrahmen überzustehen.

12. Schweißautomat nach Anspruch 11, wobei der Teleskopauszug (80) mit der ersten Fahrrolle (24) mit einem von der Längsmitte abgewandten axialen Auslegerende bündig mit dem Tragrahmen (61) abschließt.

13. Schweißautomat nach einem oder mehreren der Ansprüche 1 bis 12, ferner mit einer Justageeinrichtung (90) zum Einstellen der Spur zumindest einer der Fahrrollen (23).

14. Verfahren (100) zum thermischen Verbinden von Materialbahnen, insbesondere zum randseitigen Verbinden von einer überlappenden oberen Materialbahn mit einer unteren Materialbahn, die unter Wärmeeinwirkung und anschließender Druckbeaufschlagung stoffschlüssig miteinander verbindbar sind, mit den Schritten
- Bereitstellen eines Schweißautomaten (1) nach einem der vorhergehenden Ansprüche (S101);
- Überführen der Heizeinrichtung (10) zum zumindest teilweisen Erhitzen der zu verbindenden Materialbahnen in einem Verbindungsbereich von einer Ruheposition in eine Arbeitsposition mittels des Teleskopauszugs (70) (S102); und
- thermisches Verbinden der Materialbahnen mit dem Schweißautomat (1) (S102).

## Claims

1. Automatic welding machine (1) for thermal joining of material sheets, in particular for edge-side joining of an overlapping upper material sheet to a lower material sheet, to be connected to one another in a materially bonded manner under the application of heat and subsequent application of pressure, comprising
- a heating device (10) for at least partially heating the material sheets to be joined in a connection region,
- a support frame (61) with a housing (62),
- a pressure roller (21),
- at least two travelling rollers (23, 24),
wherein the pressure roller (21) and the traveling rollers (23, 24) are arranged on the support frame (61) and together with the support frame form a chassis (20), wherein the chassis (20) comprises a longitudinal axis and a transverse axis perpendicular thereto, which span a chassis plane,
wherein at least a first travelling roller (24) of the two travelling rollers (23, 24) is arranged to be movable by a telescopic pull-out (80) relative to the support frame (61) in directions parallel to the transverse axis,
wherein the first travelling roller (24) and the heating device (10) are with respect to a longitudinal center of the chassis arranged on opposite sides of the chassis (20);
wherein the telescopic pull-out (80) comprises an axle (81), wherein the first traveling roller (24) is fixedly attached to the axle (81) of the telescopic pull-out, wherein in an extended state the axle is pulled-out of the housing (62) of the support frame (61) and in a retracted state is received by the housing (62) of the support frame (61); and wherein the elements of the telescopic pull-out are pushed into one another.

2. Automatic welding machine according to any of the preceding claims, wherein the heating device (10) is arranged rotatably relative to the support frame (61) about an axis parallel to the transverse axis, wherein the heating device (10) is fixable axially and rotationally relative to the support frame (61) at least in a first axial and rotational pose and is fixable at least axially relative to the support frame (61) in a further, second axial and rotational pose which is at least axially different from the first pose.

3. Automatic welding machine according to claim 2, wherein the heating device (10) is arranged on the support frame (61) by a further telescopic pull-out (70),
wherein the further telescopic pull-out comprises a receptacle (72) fixed to the support frame and a shaft (71),
wherein the shaft extends between a first axial shaft end and a second axial shaft end along a shaft axis parallel to the transverse axis,
wherein the second axial shaft end is the axial shaft end facing away from the housing (62),
wherein the shaft is mounted at the receptacle so as to be movable along the shaft axis and rotatable about the shaft axis, and
wherein the heating device (10) is arranged on the shaft in a region of the second axial shaft end.

4. Automatic welding machine according to claim 3, wherein for fixing the heating device (10) in the first pose and/or in the second pose the shaft can be releasably fixed to the receptacle by a locking device (73) of the receptacle (72).

5. Automatic welding machine according to claim 4, wherein the locking device comprises at least one locking bolt (73),
wherein the locking bolt is oriented in a direction of a locking axis perpendicularly intersecting the shaft axis and is movable in the direction of the locking axis, and
wherein the shaft (71) can be fixed at least in the first pose and/or in the second pose by an at least partial engagement of the locking bolt (73) radially to the shaft axis into the shaft; in particular wherein the locking bolt is loaded by a spring force (76) in direction of the shaft axis.

6. Automatic welding machine according to one or more of claims 2 to 5, wherein a handle lever (77) is arranged at the second axial shaft end, which is configured to provide a manual rotation of the shaft (71) about the shaft axis, a manual displacement of the shaft in directions along the shaft axis and/or a manual release of a fixation of the shaft (71) from the receptacle (72).

7. Automatic welding machine according to claim 5, wherein a coaxial stud (75) is received in an interior of the shaft (71) of the further telescopic pull-out (70),
wherein the coaxial stud (75) extends parallel to the shaft axis at least partially through the shaft (71),
wherein the coaxial stud (75) is movable in directions to the shaft axis,
wherein the locking bolt (73) can be at least partially brought into engagement with the coaxial stud (75) at least in the first pose and/or the second pose, and
wherein the locking bolt (73) can be disengaged from the coaxial stud by a movement of the coaxial stud (75) in a direction along the shaft axis relative to the shaft (71).

8. Automatic welding machine according to claim 7, wherein the coaxial stud (75) projects with an axial end beyond the second end of the shaft out of the shaft (71),
wherein the handle lever (77) is arranged at this axial end of the coaxial stud (75), wherein a spring element (76) is clamped between the handle lever (77) and the second shaft end,
wherein a movement of the coaxial stud along the shaft axis in the direction of the second shaft end is limited by a stop inside the shaft (71) in combination with a counter-stop of the coaxial stud (75).

9. Automatic welding machine according to any of the preceding claims,
wherein the automatic welding machine (1) comprises a drive (22),
wherein the drive is coupled with a start-up switch (68) which is configured to provide a release signal for the drive, wherein the start-up switch (68) is arranged in the interior of the housing (62) and is configured to be actuated by retraction of the telescopic pull-out into the interior of the housing (62), in particular by a retracting shaft of the telescopic pull-out.

10. Automatic welding machine according to any of the preceding claims, wherein the first traveling roller (24) is arranged on the support frame (61) by the telescopic pull-out (80), wherein the telescopic pull-out for the traveling roller (24) comprises a dovetail rail.

11. Automatic welding machine according to claim 10, wherein the telescopic pull-out (80) with the first traveling roller (24) is configured not to protrude beyond the support frame at least at a minimum distance of the traveling roller (24) from the longitudinal center of the support frame (61) parallel to the transverse axis in a direction parallel to the transverse axis.

12. Automatic welding machine according to claim 11, wherein the telescopic pull-out (80) with the first traveling roller (24) terminates flush with the support frame (61) with an axial cantilever end facing away from the longitudinal center.

13. Automatic welding machine according to one or more of claims 1 to 12, further comprising an adjusting device (90) for adjusting the alignment of at least one of the traveling rollers (23).

14. Method (100) for thermal joining of material sheets, in particular for edge-side joining of an overlapping upper material sheet to a lower material sheet, to be joined together in a materially bonded manner under the application of heat and subsequent application of pressure, comprising the steps of
- providing an automatic welding machine (1) according to any of the preceding claims (S101);
- transferring the heating device (10) for at least partially heating the material sheets to be joined in a connection region from a rest position to a working position using the telescopic pull-out (70) (S102); and
- thermal joining of the material sheets with the automatic welding machine (1) (S102).

## Revendications

1. Machine à souder automatique (1) pour la liaison thermique de bandes de matériau, en particulier pour la liaison par le bord d'une bande de matériau supérieure chevauchant une bande de matériau inférieure, lesquelles peuvent être reliées l'une à l'autre par liaison de matière sous l'effet de la chaleur et de l'application subséquente d'une pression, comportant
- un dispositif de chauffage (10) permettant de chauffer au moins partiellement les bandes de matériau à relier dans une zone de liaison,
- un cadre de support (61) comportant un boîtier (62),
- un rouleau de pression (21),
- au moins deux rouleaux de déplacement (23, 24),
dans laquelle le rouleau de pression (21) et les rouleaux de déplacement (23, 24) sont disposés sur le cadre de support (61) et forment conjointement avec le cadre de support un châssis (20), dans laquelle le châssis (20) présente un axe longitudinal et un axe transversal perpendiculaire à celui-ci qui définissent un plan de châssis,
dans laquelle au moins un premier rouleau de déplacement (24) parmi les deux rouleaux de déplacement (23, 24) est disposé de manière mobile par rapport au cadre de support (61) au moyen d'un moyen d'extension télescopique (80) dans des directions parallèles à l'axe transversal,
dans laquelle le premier rouleau de déplacement (24) et le dispositif de chauffage (10) sont disposés sur des côtés opposés du châssis (20) par rapport à un centre longitudinal du châssis ;
dans laquelle le moyen d'extension télescopique (80) présente un axe (81), dans laquelle le premier rouleau de déplacement (24) est fixé à l'axe (81) du moyen d'extension télescopique, dans laquelle l'axe est sorti du boîtier (62) du cadre de support (61) dans un état déployé et est logé par le boîtier (62) du cadre de support (61) dans un état rétracté ; et dans laquelle les éléments du moyen d'extension télescopique sont poussés les uns dans les autres.

2. Machine à souder automatique selon l'une des revendications précédentes, dans laquelle le dispositif de chauffage (10) est disposé de manière à pouvoir tourner par rapport au cadre de support (61) autour d'un axe parallèle à l'axe transversal, dans laquelle le dispositif de chauffage (10) peut être fixé axialement et de manière à pouvoir tourner par rapport au cadre de support (61) au moins dans une première position axiale et rotative et peut être fixé au moins axialement par rapport au cadre de support (61) dans une autre seconde position axiale et rotative, différente au moins axialement de la première position.

3. Machine à souder automatique selon la revendication 2, dans laquelle le dispositif de chauffage (10) est disposé sur le cadre de support (61) au moyen d'un autre moyen d'extension télescopique (70),
dans laquelle l'autre moyen d'extension télescopique présente un palier (72) fixé sur le cadre de support et une tige (71),
dans laquelle la tige s'étend entre une première extrémité axiale de tige et une seconde extrémité axiale de tige le long d'un axe de tige parallèle à l'axe transversal,
dans laquelle la seconde extrémité axiale de tige est l'extrémité axiale de tige opposée au boîtier (62),
dans laquelle la tige est montée sur le palier de manière à être mobile le long de l'axe de tige et à pouvoir tourner autour de l'axe de tige, et
dans laquelle le dispositif de chauffage (10) est disposé sur la tige dans une zone de la seconde extrémité axiale de tige.

4. Machine à souder automatique selon la revendication 3, dans laquelle, pour une fixation du dispositif de chauffage (10) dans la première position et/ou dans la seconde position, la tige peut être fixée de manière amovible au palier au moyen d'un appareil de blocage (73) du palier (72).

5. Machine à souder automatique selon la revendication 4, dans laquelle l'appareil de blocage présente au moins un boulon de blocage (73),
dans laquelle le boulon de blocage est orienté dans des directions d'un axe de blocage coupant perpendiculairement l'axe de tige et est mobile dans des directions de l'axe de blocage, et
dans laquelle la tige (71) peut être fixée dans la tige au moins dans la première position et/ou dans la seconde position par une mise en prise au moins partielle du boulon de blocage (73) radialement par rapport à l'axe de tige ; en particulier dans laquelle le boulon de blocage est sollicité par une force élastique (76) dans la direction de l'axe de tige.

6. Machine à souder automatique selon l'une ou plusieurs des revendications 2 à 5, dans laquelle un levier de préhension (77) est disposé à la seconde extrémité axiale de tige, lequel est conçu pour fournir une rotation manuelle de la tige (71) autour de l'axe de tige, un déplacement manuel de la tige dans des directions le long de l'axe de tige et/ou une libération manuelle d'une fixation de la tige (71) du palier (72).

7. Machine à souder automatique selon la revendication 5, dans laquelle un boulon coaxial (75) est logé à l'intérieur de la tige (71) de l'autre moyen d'extension télescopique (70),
dans laquelle le boulon coaxial (75) s'étend au moins partiellement à travers la tige (71) parallèlement à l'axe de tige,
dans laquelle le boulon coaxial (75) est mobile dans des directions par rapport à l'axe de tige,
dans laquelle le boulon de blocage (73) peut être amené en prise au moins partiellement avec le boulon coaxial (75) au moins au niveau de la première position et/ou de la seconde position, et
dans laquelle le boulon de blocage (73) peut être mis hors de prise avec le boulon coaxial par un mouvement du boulon coaxial (75) dans une direction le long de l'axe de tige par rapport à la tige (71).

8. Machine à souder automatique selon la revendication 7, dans laquelle le boulon coaxial (75) dépasse de la tige (71) au-delà de la tige par une extrémité axiale au-delà de la seconde extrémité de tige,
dans laquelle le levier de préhension (77) est disposé à ladite extrémité axiale du boulon coaxial (75), dans laquelle un élément élastique (76) est serré entre le levier de préhension (77) et la seconde extrémité de tige,
dans laquelle, au moyen d'une butée à l'intérieur de la tige (71) en combinaison avec une contre-butée du boulon coaxial (75), un mouvement du boulon coaxial le long de l'axe de tige en direction de la seconde extrémité de tige est limité.

9. Machine à souder automatique selon l'une des revendications précédentes,
dans laquelle la machine à souder automatique (1) présente un dispositif d'entraînement (22),
dans laquelle le dispositif d'entraînement est couplé à un interrupteur de démarrage (68) qui est configuré pour fournir un signal de libération pour le dispositif d'entraînement, dans laquelle l'interrupteur de démarrage (68) est disposé à l'intérieur du boîtier (62) et est conçu pour être actionné par l'introduction du moyen d'extension télescopique à l'intérieur du boîtier (62), en particulier par une tige du moyen d'extension télescopique qui est introduite.

10. Machine à souder automatique selon l'une des revendications précédentes, dans laquelle le premier rouleau de déplacement (24) est disposé sur le cadre de support (61) au moyen du moyen d'extension télescopique (80), dans laquelle le moyen d'extension télescopique pour le rouleau de déplacement (24) présente un guidage en queue d'aronde.

11. Machine à souder automatique selon la revendication 10, dans laquelle le moyen d'extension télescopique (80) avec le premier rouleau de déplacement (24) est conçu pour ne pas dépasser du cadre de support dans une direction parallèle à l'axe transversal, au moins à une distance minimale du rouleau de déplacement (24) par rapport au centre longitudinal du cadre de support (61) parallèlement à l'axe transversal.

12. Machine à souder automatique selon la revendication 11, dans laquelle le moyen d'extension télescopique (80) avec le premier rouleau de déplacement (24) se termine à fleur avec le cadre de support (61) par une extrémité d'extension axiale opposée au centre longitudinal.

13. Machine à souder automatique selon l'une ou plusieurs des revendications 1 à 12, comportant en outre un dispositif d'ajustement (90) permettant de régler la voie d'au moins l'un des rouleaux de déplacement (23).

14. Procédé (100) pour la liaison thermique de bandes de matériau, en particulier pour la liaison par le bord d'une bande de matériau supérieure chevauchant une bande de matériau inférieure, lesquelles peuvent être reliées l'une à l'autre par liaison de matière sous l'effet de la chaleur et de l'application subséquente d'une pression, comportant les étapes consistant à
- fournir une machine à souder automatique (1) selon l'une des revendications précédentes (S101) ;
- transférer le dispositif de chauffage (10) permettant de chauffer au moins partiellement les bandes de matériau à relier dans une zone de liaison d'une position de repos à une position de travail au moyen du moyen d'extension télescopique (70) (S102) ; et
- relier thermiquement les bandes de matériau avec la machine à souder automatique (1) (S102).
